# EUROPÄISCHE PATENTSCHRIFT

(11) **EP 1 120 628 B1**
(45) Veröffentlichungstag und Bekanntmachung des Hinweises auf die Patenterteilung: **17.08.2005**
(21) Anmeldenummer: 01100829.9
(22) Anmeldetag: 15.01.2001
(51) Int. Cl.: G01B 21/20, B21B 38/12

(54) **Messbalken an Walze eines Walzgerüsts mit Kompensationseinrichtung**
Measuring beam used with roller of a roller stage with compensation device
Poutres de mesure avec cylindre d'un ensemble de cylindrage avec dispositif de compensation

(30) Priorität: 27.01.2000 DE 10003496
(43) Veröffentlichungstag der Anmeldung: 01.08.2001
(73) Patentinhaber: SIEMENS AKTIENGESELLSCHAFT, 80333 München (DE)
(72) Erfinder: Brüstle, Roland, Dipl.-Ing., 91077 Neunkirchen (DE); Stammberger, Karl, Dr., 91056 Erlangen (DE)

(56) Entgegenhaltungen:
- EP-A- 0 779 112

## Beschreibung

Die Erfindung bezieht sich auf eine Vorrichtung zur Messung der Kontur, der horizontalen Krümmung und/oder der horizontalen Position einer Walze eines Walzgerüsts, mit berührungslos arbeitenden Abstandssensoren, mittels denen ein Abstand zur Mantelfläche der Walze berührungsfrei messbar ist und mit zumindest einem Messbalken, der parallel zur Walze in einem festen Abstand zu dieser angeordnet ist und an dem mehrere Abstandssensoren in seiner Axialrichtung zueinander beabstandet angeordnet sind.

Für die stabile regelungstechnische Beherrschung der Prozesse zur Herstellung von Metallband ist es notwendig, exakte Kenntnisse über den aktuellen Zustand und die aktuelle räumliche Lage der Arbeitswalzen im Walzgerüst zu besitzen. Zu diesem Zweck wurden theoretische Modelle entwickelt, die insbesondere die Verformung der Arbeitswalzen über die Breite unter der Wirkung der Walzkräfte und der dabei auftretenden Temperaturen sowie den Verschleiß beschreiben. Mit erhöhten Anforderungen an die Qualität des Walzgutes ist eine Verbesserung der Regelprozesse und damit eine Präzisierung der Kenntnisse über die Walzenverformung durch Messung des aktuellen Walzenzustandes bzw. seiner Veränderung während des Walzprozesses erforderlich.

Bisherige Versuche zur Messung des aktuellen Walzenzustandes über die Breite und der Bestätigung der theoretischen Annahmen während des Walzprozesses scheiterten aufgrund der komplizierten Umweltbedingungen in der Nähe des Walzspaltes, da in der unmittelbaren Messzone u.a. komplizierte, zeitlich veränderliche Temperaturfelder, hervorgerufen durch den Walzprozess und eine massive Kühlmittelzufuhr, bestehen, die in Verbindung mit der Benetzung der Arbeitswalzen durch flüssiges Kühlmittel als Flüssigkeitsschwall oder Spritzflüssigkeit jede Messung unmöglich machten.

Aus der EP 0 779 112 A1 ist eine Konturmesseinrichtung zur Messung der Kontur von in einem Walzgerüst eingebauten Walzen beim Walzvorgang mit mindestens einem Abstandssensor, dessen Messkopf auf die Walzenoberfläche ausgerichtet ist, bekannt. Aus der vorgenannten Druckschrift ist auch bekannt, dass an einem sich über die Walzenlänge erstreckenden Längsträger quer zur Walzenlängsachse eine Vielzahl von berührungslos messenden Abstandssensoren mit seitlichem Abstand zueinander angeordnet sind. Dabei ist der Längsträger zur Kühlung der Abstandssensoren als Doppelmantelrohr mit einem Innenrohr zur Durchleitung eines Kühlmediums und einem das Innenrohr unter Belassung eines Ringraums umgebenden Mantelrohr ausgebildet. Auch die in der EP 0 779 112 A1 beschriebene Konturmesseinrichtung wird jedoch den zuvor erwähnten komplizierten Umweltbedingungen während des Walzprozesses nicht in zufrieden stellender Weise gerecht und kann keine hinreichend präzisen Kenntnisse über die Walzenverformung liefern.

Der Erfindung liegt die Aufgabe zugrunde, die eingangs geschilderte Vorrichtung zur Messung der Kontur, der horizontalen Krümmung und/oder der horizontalen Position einer Walze eines Walzgerüsts derart weiterzubilden, dass sie in unmittelbarer Nähe der Arbeitswalzen eines Walzgerüsts angeordnet werden kann, dass sie von einer festen Messbasis aus die Entfernung zur Walzenoberfläche messen kann und so, weitgehend ünbeeinflusst durch Kühlmittel- und Temperatureinflüsse, eine Positions-, Verformungs- und Verschleißmessung der Arbeitswalzen erlaubt.

Diese Aufgabe wird erfindungsgemäß dadurch gelöst, dass die Vorrichtung zur Messung der Kontur, der horizontalen Krümmung und/oder der horizontalen Position der Arbeitswalze zumindest einen Messbalken aufweist, der parallel zur Walze in einem festen Abstand zu dieser angeordnet ist und an dem mehrere berührungslos arbeitende Abstandssensoren in Axialrichtung des Messbalkens zueinander beabstandet angeordnet sind. Die berührungslose Entfernungsmessung zwischen der Arbeitswalze und den fest im Raum stehenden berührungslos arbeitenden Abstandssensoren ist für die Erstellung aussagekräftiger Messwerte besonders geeignet, zumal unter bestimmten Bedingungen Temperatur- und Entfernungseinflüsse im Messsignal getrennt werden können. Die Anordnung der berührungslos arbeitenden Abstandssensoren erfolgt in unmittelbarer Nähe der zu untersuchenden Walze. Erfindungsgemäß ist dem Messbalken eine Kompensationseinrichtung zugeordnet, die Temperaturfühler zur Erfassung von Temperaturen am Messbalken und eine Auswerteelektronik aufweist, mittels der eine auf der Grundlage der von den Temperaturfühlern erfassten Temperaturwerten ermittelte thermische Biegung des Messbalkens kompensierbar ist. Etwaige aus der thermischen Biegung des Messbalkens resultierende Verfälschungen eines Messsignals der Abstandssensoren können so kompensiert werden.

Die Eliminierung von Schwingungen des Messbalkens kann realisiert werden, indem dem Messbalken eine Filtereinrichtung zugeordnet ist, mittels der mechanische Schwingungen des Messbalkens in einem Messsignal unterdrückbar sind. Erfindungsgemäß wird somit ausgeschlossen, dass von den Abstandssensoren des Messbalkens stammende Messsignale irgendwelchen Störungen unterliegen, die auf Verformungen durch geometrisch ungleichmäßige und zeitlich veränderliche Erwärmung des Messbalkens zurückgehen. Des Weiteren ist es erfindungsgemäß möglich, etwaige Bewegungen der Walzen rechentechnisch zu eliminieren.

Jeder Messbalken der erfindungsgemäßen Vorrichtung kann zumindest drei, z.B. fünf, Abstandssensoren aufweisen. Hierdurch kann der Abstand zwischen dem Messbalken und der Walzenoberfläche von mehreren Abstandssensoren über die Walzenbreite während und außerhalb des Walzprozesses berührungslos gemessen werden. Aus den Abstandswerten können die thermische Durchmesserveränderung, die Krümmung der Walzenachse und/oder die Position der Walze bestimmt werden.

Zweckmäßigerweise weist die erfindungsgemäße Vorrichtung zwei oder drei Messbalken auf, die zueinander versetzt am Umfang der Walze angeordnet sind. Mit drei Messbalken kann neben der Walzenkontur die exakte Lage der Walze und die räumliche Krümmung der Walzenachse im Raum bestimmt werden, wohingegen mit zwei oder einem Messbalken demgegenüber nur eingeschränkte Aussagen möglich sind.

Gemäß einer vorteilhaften Ausführungsform der erfindungsgemäßen Vorrichtung können die Messbalken in Laufrichtung des Walzgutbandes stromauf und stromab der Arbeitswalze angeordnet sein.

Des Weiteren ist es möglich, die Messbalken unter unterschiedlichen Winkeln zur Walzgutebene anzuordnen.

Die erfindungsgemäße Vorrichtung kann der oberen Arbeitswalze eines Walzgerüsts oder der unteren Arbeitswalze eines Walzgerüsts zugeordnet sein. Selbstverständlich ist es auch möglich, sowohl für die obere Arbeitswalze als auch für die untere Arbeitswalze eines Walzgerüsts jeweils eine erfindungsgemäße Vorrichtung vorzusehen.

Des Weiteren ist es möglich, an mehreren Arbeitswalzen, z.B. an allen oberen und/oder allen unteren Arbeitswalzen unterschiedlicher Walzgerüste einer Walzstraße eine erfindungsgemäße Vorrichtung zuzuordnen.

Zweckmäßigerweise sind die an einem Messbalken angeordneten Abstandssensoren untereinander gleichbeabstandet, wobei sie vorteilhaft quer zur Laufrichtung des Walzgutbandes symmetrisch zur Walzgutband- und zur Walzenmitte angeordnet sind.

Sofern zumindest die beiden äußeren Abstandssensoren des Messbalkens außerhalb der Walzgutbandspur, die in Bezug auf die Arbeitswalzen verschleißbehaftet ist, angeordnet sind, können auf der Basis dieser beiden durch die äußeren Abstandssensoren gebildeten Messstellen Relativmessungen des dazwischenliegenden Bereichs der Außenmantelfläche der zu untersuchenden Arbeitswalze vorgenommen werden.

Zweckmäßigerweise sind die Achsen jedes Messbalkens und die Achsen der Abstandssensoren des jeweiligen Messbalkens in einer Ebene angeordnet, wobei darüber hinaus vorteilhaft die aktiven Stirnflächen der Abstandssensoren den gleichen Abstand zur Achse des Messbalkens aufweisen sollten.

Die Messbalken der erfindungsgemäßen Vorrichtung sind parallel zur Walzenachse im freien Raum oberhalb bzw. unterhalb der Walzgutebene vor und hinter der Arbeitswalze angeordnet.

Um Behinderungen beim Walzenwechsel und bei Zustellbewegungen auszuschließen, sind die Messbalken an beiden seitlichen Stützstellen mit Positionier- und Haltevorrichtungen verbunden, die die jeweilige erfindungsgemäße Vorrichtung aus dem Bereich der Einbaustückkontur schwenkt oder verfährt und abhängig von der Größe der Zustellung und vom aktuellen Durchmesser der Walzen die Abstandssensoren immer im gleichen Abstand auf die Walzenoberfläche richtet.

Um jeden der mit mehreren Abstandssensoren bestückten Messbalken mit einer Verzugsstabilisierung zu versehen, mittels der gewährleistet werden kann, dass thermische Effekte nicht zu einer Veränderung der Lage der Sensorzeile im Raum führen, ist es zweckmäßig, wenn jeder Messbalken mit einer ihn umgebenden Temperaturabschirmung versehen wird. Hierdurch kann jeder mehrere Abstandssensoren tragende Messbalken vor direkter thermischer Verformung infolge einseitiger und zeitlich veränderlicher Erwärmung und Abkühlung durch einen durch diese Temperaturabschirmung gebildeten, die Wärmeübertragung behindernden Schirm umschlossen werden.

Vorteilhaft weisen der Messbalken und/oder die Temperaturabschirmung Rohrquerschnitt auf.

Wenn die Temperaturabschirmung auf der Außenfläche des Messbalkens sitzt und als Isolierschicht aus einem elastischen oder leicht verformbaren und wärmedämmendem Werkstoff ausgebildet ist, ist einerseits ein Temperaturschutz des eigentlichen Messbalkens realisierbar, wobei darüber hinaus an der Isolierschicht auftretende, auf deren Temperaturbelastung zurückgehende Abmessungsveränderungen nicht auf den eigentlichen Messbalken übertragen werden.

Zur weiteren Minimierung von Temperatureinflüssen auf den Messbalken kann dieser in seinem Inneren einen Hohlraum aufweisen, durch den ein Kühlmedium geleitet werden kann.

Bei einer weiteren vorteilhaften Ausführungsform des Messbalkens bzw. der Messbalken der erfindungsgemäßen Vorrichtung umgibt die Temperaturabschirmung den Messbalken unter Ausbildung eines Spaltraums mit einem Abstand.

Wenn der Messbalken als dünnwandiges Rohr ausgebildet ist, an dessen beiden Stirnenden jeweils ein Lagerzapfen angebracht ist, mittels denen der Messbalken lager- bzw. halterbar ist, ergibt sich für den eigentlichen Messbalken ein Profil mit hoher Biegesteifigkeit und niedriger Eigenmasse. Die Verformungen des Messbalkens infolge der Belastung durch seine Eigenmasse werden somit minimiert.

Zur Vereinfachung der Installation der Verkabelung der Abstandssensoren des Messbalkens ist es vorteilhaft, wenn zumindest ein Lagerzapfen des Messbalkens lösbar mit dem dünnwandigen Rohr verbunden ist und eine durchgehende Axialbohrung aufweist, die als Kabeldurchführung dienen kann.

In konstruktiv-technisch wenig aufwendiger Weise können auf der Außenfläche des Messbalkens Augen ausgebildet sein, an denen die Abstandssensoren anbringbar sind.

Zweckmäßigerweise ist der Abstand zwischen der Außenfläche des Rohrs des Messbalkens und der Innenfläche eines die Temperaturabschirmung bildenden äußeren Rohrs konstant. Durch dieses einen Wärmeschirm bildenden äußere Rohr der Temperaturabschirmung wird eine Verformung des Messbalkens aufgrund einseitiger Temperatureinwirkung und damit eine Verfälschung der Messwerte der Abstandssensoren verhindert.

Aufgrund der rohrförmigen selbsttragenden Struktur der Temperaturabschirmung und aufgrund der biege- und dehnkraftübertragungsfreien Lagerung der Temperaturabschirmung in Bezug auf den Messbalken werden Auswirkungen der Verformungen der Temperaturabschirmung, die unmittelbar den ungünstigen thermischen Bedingungen in Walzgutnähe ausgesetzt ist, vom Messbalken ferngehalten.

Dies ist in technisch-konstruktiv wenig aufwendiger Weise dadurch realisierbar, dass die Temperaturabschirmung mittels zweier nahe ihren Stirnflächen angeordneter, radial einwärts vorstehender schmaler Lagerbunde gelenkig und axialverschieblich an der Lagervorrichtung des Messbalkens gehaltert ist.

Die Halterung der Temperaturabschirmung am Messbalken kann auch mittels metallischer Stütz- und Dichtmembranen realisiert werden.

Alternativ kann die Temperaturabschirmung auch mittels vorzugsweise nichtmetallischer Stopfbuchspackungen am Messbalken gehaltert sein.

Vorteilhaft ist darüber hinaus die Temperaturabschirmung mit der den Messbalken halternden Lagervorrichtung durch eine elastische Dichteinrichtung verbunden, die den Spaltraum zwischen der Innenfläche der Temperaturabschirmung und der Außenfläche des Messbalkens nach außen abdichtet.

Die elastische Dichteinrichtung kann vorteilhaft aus Dichtmanschetten ausgebildet sein, die an ihrer einen Seite mit der Temperaturabschirmung und an ihrer anderen Seite mit der den Messbalken halternden Lagervorrichtung verbunden sind.

Alternativ kann die elastische Dichteinrichtung aus Dichtringen ausgebildet sein, deren Innenumfang mit der den Messbalken halternden Lagervorrichtung und deren Außenumfang mit der Temperaturabschirmung in Anlage ist.

Die Dichtringe können vorteilhaft als O-Ringe oder Wellendichtringe ausgebildet sein.

Sie können aus einem elastischen metallischen Werkstoff oder aus einem elastischen nichtmetallischen Werkstoff ausgebildet sein.

Der Spaltraum zwischen der Außenfläche des Messbalkens und der Innenfläche der Temperaturabschirmung kann vorteilhaft von einem gasförmigen oder flüssigen Kühlmedium durchströmt werden, wodurch eine gleichförmige Temperaturverteilung im bzw. am Messbalken erreicht wird und die Ursache für thermisch begründete Verkrümmungen des Messbalkens durch einseitige Erwärmungen entfallen kann.

Vorteilhaft weist die Temperaturabschirmung jedes Messbalkens je Abstandssensor des betreffenden Messbalkens ein Fenster auf, welches vorzugsweise mittels einer Abdeckung aus einem elektrisch nichtleitenden oder lichtdurchlässigen Werkstoff fluiddicht geschlossen ist. Die Abdeckungen der Fenster können zweckmäßigerweise als Membranen ausgebildet sein. Hierdurch wird eine lokale Durchlässigkeit des die Temperaturabschirmung bildenden Rohres für ein elektromagnetisches Feld oder für Licht geschaffen, was für als Wirbelstromsensoren bzw. als optische Sensoren ausgebildete berührungslos arbeitende Abstandssensoren wesentlich ist.

Wenn die Temperaturabschirmung nahe ihrer einen Stirnseite einen Kühlmediumzulauf und nahe ihrer anderen Stirnseite einen Kühlmediumablauf aufweist, kann das Kühlmedium zur Vergleichmäßigung und Konstanthaltung der Temperatur des Messbalkens an diesem geplant vorbeigeströmt werden.

Um eine weitgehend gleichmäßige Temperaturverteilung am Messbalken sicherzustellen ist es vorteilhaft, wenn zwischen dem Kühlmediumzulauf und dem Kühlmediumablauf im Spaltraum zwischen der Innenfläche der Temperaturabschirmung und der Außenfläche des Messbalkens eine Leiteinrichtung zur Führung des Kühlmediums vom Kühlmediumzulauf zum Kühlmediumablauf angeordnet ist.

So ist es beispielsweise vorteilhaft, wenn mittels einer als wendelförmig um den Messbalken ausgebildeten Leiteinrichtung eine exakt definierte Strömung in dem Spaltraum zwischen Temperaturabschirmung und Messbalken geschaffen wird.

Um zu verhindern, dass mittels der Leiteinrichtung eine Verformung des die Temperaturabschirmung bildenden äußeren Rohres zu einer Verspannung des den Messbalken bildenden inneren Rohres führt, ist es wesentlich, dass die Leiteinrichtung nicht sowohl mit dem Messbalken als auch mit der Temperaturabschirmung verbunden ist. Alternativ kann die Leiteinrichtung am Messbalken befestigt und in Bezug auf die Temperaturabschirmung berührungsfrei ausgebildet sein oder aber an der Temperaturabschirmung befestigt und in Bezug auf den Messbalken berührungsfrei ausgebildet sein.

Der Messbalken kann aus einem üblichen Konstruktionswerkstoff oder aus einem Werkstoff mit einem extrem niedrigen Wärmeausdehnungskoeffizienten ausgebildet sein.

Zur Erzielung spezieller Wärmedämmungs- und Wärmeübergangsverhältnisse kann die Temperaturabschirmung einwandig aus einem homogenen Werkstoff oder mehrwandig aus einer Kombination von Werkstoffen, z.B. aus einem Metall und einem wärmedämmenden Material, ausgebildet sein.

Verbindungskabel der Abstandssensoren können durch eine axial oder radial im Messbalken ausgebildete Öffnung geführt werden.

Erfindungsgemäß wird eine Vorrichtung zur Bestimmung der Walzenkontur sowie der Lage und Form der Walzenachse über die Breite der Walze mittels eines, zweier oder dreier am Walzenumfang versetzt angeordneter Messbalken geschaffen; als Basis für das mittels der erfindungsgemäßen Vorrichtung durchführbare Messverfahren dient eine Entfernungsmessung zwischen der Walzenoberfläche und jeweils mehrere Abstandssensoren tragenden Messbalken und die Unterdrückung der messwertverfälschenden thermischen Verformung der Messbalken als eigentlichen Sensor-Trageorganen infolge einseitiger und zeitlich veränderlicher Erwärmung und Abkühlung mittels einer wärmeabweisenden bzw. wärmedämmenden äußeren Temperaturabschirmung und einer Einrichtung zur Kühlung und Gewährleistung weitgehender Temperaturkonstanz der Messbalken.

Im folgenden wird die Erfindung an Hand von Ausführungsformen unter Bezugnahme auf die Zeichnung näher erläutert.

Es zeigen:
- FIG 1: Prinzipdarstellungen für drei unterschiedliche Ausführungsformen der erfindungsgemäßen Vorrichtung an einem Walzgerüst;
- FIG 2: eine Prinzipdarstellung der Anordnung berührungslos arbeitener Abstandssensoren an einem Messbalken der erfindungsgemäßen Vorrichtung;
- FIG 3: eine erste Ausführungsform eines mit einer Wärmeabschirmung versehenen Messbalkens einer erfindungsgemäßen Vorrichtung;
- FIG 4: eine weitere Ausführungsform eines mit einer Wärmeabschirmung versehenen Messbalkens einer erfindungsgemäßen Vorrichtung;
- FIG 5: eine Prinzipdarstellung einer Leiteinrichtung für ein Kühlmedium an einem Messbalken einer erfindungsgemäßen Vorrichtung; und
- FIG 6: eine weitere Ausführungsform eines Messbalkens einer erfindungsgemäßen Vorrichtung.

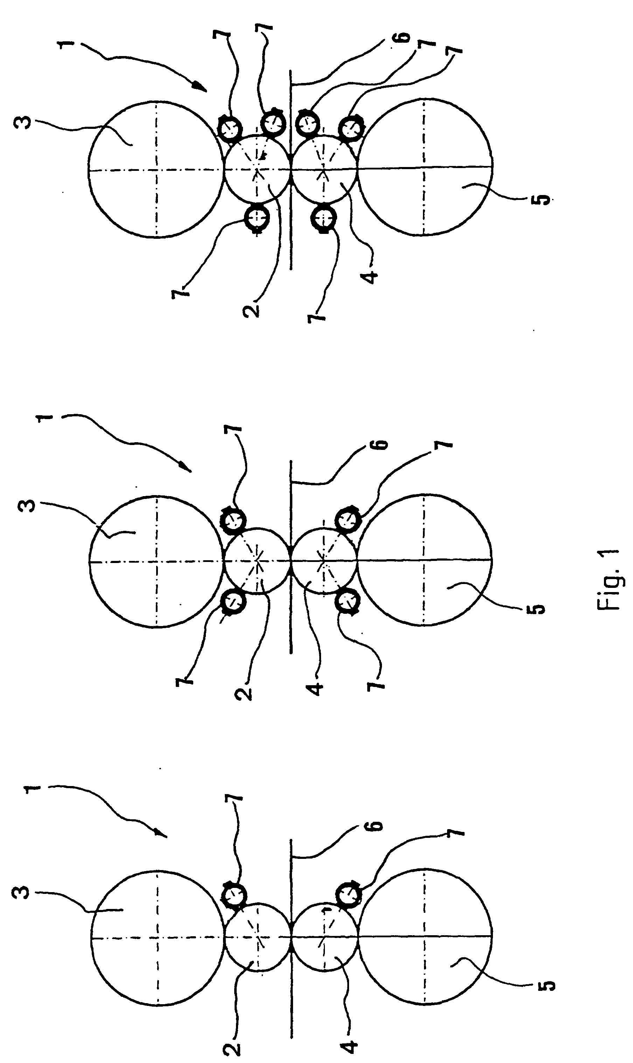

In den drei Prinzipdarstellungen der FIG 1 ist jeweils ein Walzgerüst 1 dargestellt, das einen Bestandteil einer im übrigen in den FIGUREN nicht gezeigten Walzstraße bzw. Walzanlage bildet.

Das Walzgerüst 1 hat eine obere Arbeitswalze 2, die von einer oberen Stützwalze 3 gestützt wird, und eine untere Arbeitswalze 4, die von einer unteren Stützwalze 5 gestützt wird.

Zwischen der oberen Arbeitswalze 2 und der unteren Arbeitswalze 4 des Walzgerüsts 1 ist der Walzspalt des Walzgerüsts 1 ausgebildet, der im Betrieb des Walzgerüsts 1 von einem zu walzenden Walzgutband 6 durchlaufen wird.

Bei dem in FIG 1 linken Walzgerüst 1 sind die obere Arbeitswalze 2 und die untere Arbeitswalze 4 jeweils mit einer erfindungsgemäßen Vorrichtung zur Messung der Kontur, der horizontalen Krümmung und/oder der horizontalen Position der jeweiligen Arbeitswalze 2 bzw. 4 ausgerüstet. Da sich die beiden erfindungsgemäßen Vorrichtungen hinsichtlich ihrer Anordnung, Funktion und Wirkung entsprechen, wird im Folgenden lediglich die der oberen Arbeitswalze 2 zugeordnete erfindungsgemäße Vorrichtung beschrieben.

Zu der der oberen Arbeitswalze 2 zugeordneten erfindungsgemäßen Vorrichtung gehört ein Messbalken 7, der bzw. dessen Längsachse parallel zur Längsachse der oberen Arbeitswalze 2 angeordnet ist. Zwischen der Außenfläche des Messbalkens 7 und dem Außenmantel der oberen Arbeitswalze 2 ist immer ein Abstand vorgesehen, so dass mittels am Messbalken 7 in dessen Axialrichtung zueinander beabstandet angeordneter, in FIG 1 nicht dargestellter, berührungslos arbeitender Abstandssensoren der Abstand zur Mantelfläche der Arbeitswalze 2 im Betrieb des Walzgerüsts 1 kontinuierlich erfassbar ist.

Die bei dem in FIG 1 mittleren Walzgerüst 1 eingesetzte erfindungsgemäße Vorrichtung unterscheidet sich von der vorstehend geschilderten Vorrichtung dadurch, dass zwei Messbalken 7 vorgesehen sind, von denen einer in Laufrichtung des Walzgutbandes 6 stromauf der oberen Arbeitswalze 2 und der andere in Laufrichtung des Walzgutbandes 6 stromab der oberen Arbeitswalze 2 angeordnet ist. In entsprechender Weise ist die der unteren Stützwalze 5 des in FIG 1 mittleren Walzgerüsts 1 zugeordnete erfindungsgemäße Vorrichtung ausgestaltet.

In weiterer Abänderung der erfindungsgemäßen Vorrichtung weist diese bei der in FIG 1 dem rechten Walzgerüst 1 zugeordneten Ausführungsform sowohl im Falle der oberen Arbeitswalze 2 als auch im Falle der unteren Arbeitswalze 4 jeweils drei Messbalken 7 auf, die in unterschiedlichen Winkeln zur durch das Walzgutband 6 gebildeten Walzgutebene selbstverständlich jeweils mit ihrer Mittelachse parallel zur oberen 2 bzw. unteren Arbeitswalze 4 angeordnet sind.

Die Anordnung und die Anzahl der Messbalken 7 je erfindungsgemäßer Vorrichtung ist prinzipiell beliebig, wird jedoch im Einzelfall durch die Anforderungen an die erwünschten Aussagen bestimmt. Eine Messung durch drei Messbalken 7 gewährleistet eine optimale Bestimmung der Kontur, der horizontalen Position und der horizontalen Krümmung der Walzenachse der oberen Arbeitswalze 2 bzw. der unteren Arbeitswalze 4.

Wie sich aus den Darstellungen in FIG 1 ergibt, kann die vorstehend erläuterte Messung an einer beliebigen der beiden Arbeitswalzen 2, 4 oder aber an beiden Arbeitswalzen 2, 4 vorgenommen werden.

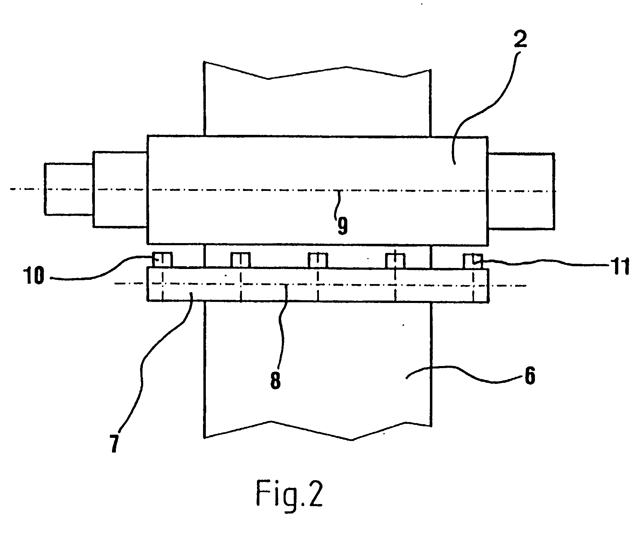

Aus der in FIG 2 gezeigten Darstellung einer oberen Arbeitswalze 2, eines dieser oberen Arbeitswalze 2 zugeordneten Messbalkens 7 der erfindungsgemäßen Vorrichtung und des von der oberen Arbeitswalze 2 gewalzten Walzgutbandes 6 geht hervor, dass die Längsachse 8 des Messbalkens 7 parallel zur Längsachse 9 der oberen Arbeitswalze 2 sich erstreckt und dass die beiden Längsachsen 8, 9 senkrecht zur Laufrichtung des Walzgutbandes 6 angeordnet sind.

Auf der Außenfläche des Messbalkens 7 sind bei der in FIG 2 dargestellten Ausführungsform fünf berührungslos arbeitende Abstandssensoren 10 angeordnet, die im Betrieb des Walzgerüsts 1 den Abstand zwischen ihren Abstrahlflächen und der diesen gegenüberliegenden Abschnitte der Außenmantelfläche der oberen Arbeitswalze 2 kontinuierlich erfassen können. Die berührungslos arbeitenden Abstandssensoren 10 können z.B. als Wirbelstromsensoren oder als optische Sensoren ausgebildet sein.

Aus der in FIG 2 gezeigten Darstellung geht hervor, dass die am Messbalken 7 vorgesehenen Abstandssensoren 10 untereinander gleichbeabstandet sind. Des Weiteren sind die am Messbalken 7 angeordneten Abstandssensoren 10 quer zur Laufrichtung des Walzgutbandes 6 symmetrisch zur Walzgutbandmitte und zur Mitte der oberen Arbeitswalze 2 angeordnet. Die beiden am Messbalken 7 außen angeordneten Abstandssensoren 10 befinden sich außerhalb der Spur des Walzgutbandes 6. Auf der Basis der durch diese beiden äußeren Abstandssensoren 10 gebildeten Messstellen kann somit eine Relativmessung des zwischen diesen beiden Messstellen liegenden Bereichs der Außenmantelfläche der oberen Arbeitswalze 2 vorgenommen werden.

Der Messbalken 7 kann eine Kompensationseinrichtung aufweisen bzw. einer Kompensationseinrichtung zugeordnet sein, die Temperaturfühler zur Erfassung der Temperatur am Messbalken 7 und eine Auswerteelektronik aufweist, mittels der eine auf der Grundlage der von den Temperaturfühlern erfassten Temperaturwerten ermittelte thermische Biegung des Messbalkens 7 kompensierbar ist. Des Weiteren kann dem Messbalken 7 eine Filtereinrichtung zugeordnet sein, mittels der mechanische Schwingungen des Messbalkens 7 im Messsignal der Abstandssensoren 10 unterdrückbar sind.

Die Längsachse 8 des Messbalkens 7 und die Achsen 11 der Abstandssensoren 10 des Messbalkens 7 sind in einer Ebene angeordnet. Die aktiven Stirn- bzw. Abstrahlflächen der Abstandssensoren 10 weisen den gleichen Abstand zur Längsachse 8 des Messbalkens 7 auf.

Der Messbalken 7 ist in Bezug auf die Arbeitswalze 2, 3 verschwenk- oder verfahrbar gehaltert, und zwar mittels an seinen beiden seitlichen Stützstellen vorgesehener Positionier- und Haltevorrichtungen, mittels denen er verschwenk- oder verfahrbar und jeweils unter Einhaltung eines vorgegebenen Abstands zwischen seinen Abstandssensoren 10 und der Walzenoberfläche der Arbeitswalze 2, 3 in Abhängigkeit von der Zustellung und vom aktuellen Durchmesser der Arbeitswalze 2, 3 ausrichtbar ist.

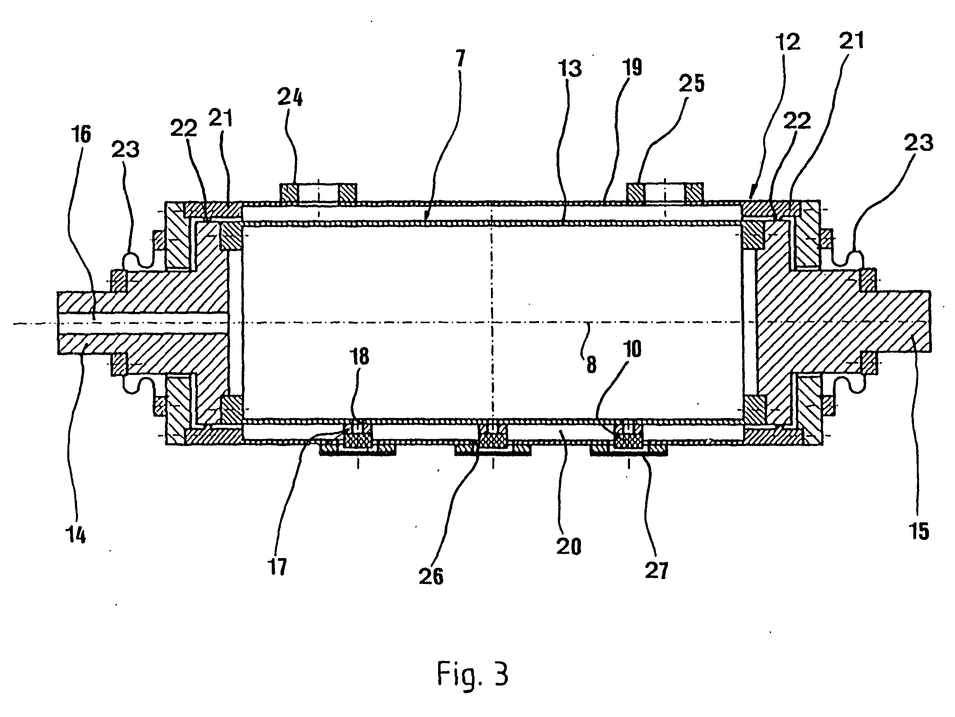

Der Messbalken 7 kann, wie aus der in FIG 3 dargestellten Ausführungsform hervorgeht, mit einer Temperaturabschirmung 12 versehen sein. Der Messbalken 7 besteht bei der in FIG 3 dargestellten Ausführungsform aus einem dünnwandigen Rohr 13, das an seinen beiden Stirnenden mit Lagerzapfen 14, 15 versehen ist.

Bei der in FIG 3 dargestellten Ausführungsform ist der dem in FIG 3 rechten Stirnende des dünnwandigen Rohrs 13 zugeordnete Lagerzapfen 14 trennbar mit dem dünnwandigen Rohr 13 verbunden. Dieser Lagerzapfen 14 weist eine Axialbohrung 16 auf, die sich koaxial zur Längsachse 8 des Messbalkens 7 bzw. des dünnwandigen Rohrs 13 erstreckt. Diese Axialbohrung 16 dient als Kabeldurchführung für der Verkabelung der Abstandssensoren 10 dienende, in der FIG 3 nicht dargestellte Leitungszweige.

Das dünnwandige Rohr 13 ist auf seiner Außenmantelfläche mit Augen 17 versehen, auf denen die Abstandssensoren 10 des Messbalkens 7 befestigt sind. Die Verkabelung der Abstandssensoren 10 erfolgt durch in Radialrichtung des Messbalkens 7 bzw. des dünnwandigen Rohres 13 und die Augen sich erstreckende Ausnehmungen 18.

Das den wesentlichen Bestandteil des Messbalkens 7 ausbildende dünnwandige Rohr 13 wird koaxial von der Temperaturabschirmung 12 umschlossen, zu der ein weiteres äußeres dünnwandiges Rohr 19 gehört. Mittels dieses äußeren dünnwandigen Rohres 19 der Temperaturabschirmung 12 wird die unmittelbare Wärmestrahlung und Wärmekonvektion vom Walzgutband 6 und von den Arbeitswalzen 2, 3 verhindert. Darüber hinaus verhindert dieses äußere dünnwandige Rohr 19 der Temperaturabschirmung 12 einen unmittelbaren einseitigen Kühlmittelzutritt zum Messbalken 7 bzw. zu dessen dünnwandigem Rohr 13. Zwischen dem äußeren dünnwandigen Rohr 19 der Temperaturabschirmung 12 und dem inneren dünnwandigen Rohr 13 des Messbalkens 7 ist ein ringförmiger Spaltraum 20 ausgebildet.

Das äußere dünnwandige Rohr 19 weist an seinen beiden Stirnenden jeweils einen Endabschnitt 21 mit dickerem Querschnitt auf, auf dessen Innenmantelfläche ein schmaler Stütz- bzw. Lagerbund 22 ausgebildet ist, der auf dem entsprechenden Lagerzapfen 14 bzw. 15 der aus den beiden Lagerzapfen 14, 15 gebildeten Lagervorrichtung des Messbalkens 7 bzw. des dünnwandigen Rohrs 13 aufliegt. Die Schmalheit der Stütz- bzw. Lagerbunde 22 und das lose Aufliegen dieser Lagerbunde 22 sichert eine verschiebbare und eine biegemomentfreie Verbindung zwischen dem äußeren dünnwandigen Rohr 18 und dem inneren dünnwandigen Rohr 13.

Eine Temperaturbelastung des äußeren dünnwandigen Rohrs 19 der Temperaturabschirmung 12 und eine sich daraus ergebende Änderung der Abmessungen des äußeren dünnwandigen Rohrs 19 hat somit keine Belastung des inneren dünnwandigen Rohrs 13 des Messbalkens 7 zur Folge, so dass der Abstand zwischen den Abstandssensoren 10 und der Längsachse 9 der Arbeitswalze 2 bzw. 3 konstant bleibt.

An den beiden Stirnenden des Messbalkens 7 und der Temperaturabschirmung 12 ist jeweils eine elastische Dichtmanschette 23 vorgesehen, mittels der der ringförmige Spaltraum 20 zwischen dem äußeren dünnwandigen Rohr 19 und dem inneren dünnwandigen Rohr 13 gegen die Umgebung abgedichtet ist.

Das die Temperaturabschirmung 12 bildende äußere dünnwandige Rohr 19 hat einen als Zulaufstutzen 24 ausgebildeten Kühlmediumzulauf im Bereich seines einen Stirnendes und einen als Rücklaufstutzen 25 ausgebildeten Kühlmediumablauf im Bereich des anderen Stirnendes. Durch den Zulaufstutzen 24 wird ein geeignetes Kühlmittel in den Spaltraum 20 zwischen den beiden koaxial zueinander angeordneten Rohren 13, 19 eingeleitet, welches eine gleichmäßige Temperaturverteilung auf dem inneren dünnwandigen Rohr 13 des Messbalkens 7 gewährleisten soll. Dieses Kühlmittel wird durch den Rücklauf 25 aus dem Spaltraum 20 abgeführt.

Im Bereich der auf der Außenmantelfläche des dünnwandigen Rohrs 13 des Messbalkens 7 angeordneten Abstandssensoren 10 ist das äußere dünnwandige Rohr 19 der Temperaturabschirmung 12 mit Fenstern 26 versehen. Durch die Fenster 26 können die Abstandssensoren 10 des Messbalkens 7 den Abstand zur Mantelfläche der Arbeitswalze 2 bzw. 3 erfassen. Die Fenster 26 sind bei dem in FIG 3 dargestellten Ausführungsbeispiel durch Membranen 27 geschlossen, die je nach Ausgestaltung der Abstandssensoren 10 aus einem elektrisch nicht leitenden bzw. lichtdurchlässigen Werkstoff ausgebildet sind. Mittels der Membranen 27 sind die Fenster 26 im äußeren dünnwandigen Rohr 19 der Temperaturabschirmung 12 flüssigkeits- und gasdicht verschlossen.

Anstelle der Stütz- und Lagerbunde 22 können bei anderen Ausführungsformen des Messbalkens 7 stützende und dichtende Metallmembranen oder z.B. nichtmetallische Stopfbuchspackungen vorgesehen sein, mittels denen eine verschiebbare und biegemomentfreie Verbindung zwischen dem Messbalken 7 und der Temperaturabschirmung 12 bzw. dem inneren dünnwandigen Rohr 13 des Messbalkens 7 und dem äußeren dünnwandigen Rohr 19 der Temperaturabschirmung 12 realisiert werden können.

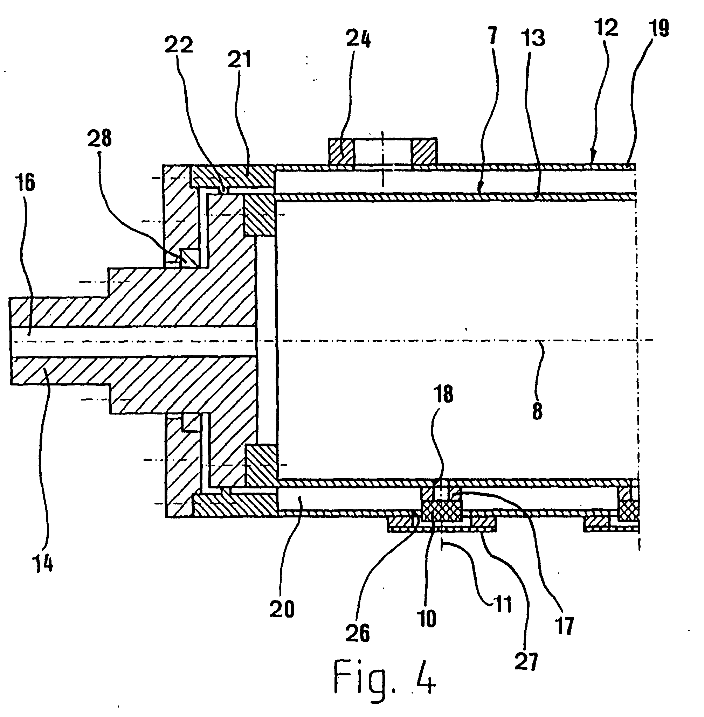

Der in FIG 4 mit seiner linken Hälfte dargestellte Messbalken 7 hat grundsätzlich den gleichen Aufbau wie der vorstehend an Hand von FIG 3 geschilderte Messbalken 7. Die Abdichtung des Spaltraums 20 zwischen dem inneren dünnwandigen Rohr 13 des Messbalkens 7 und dem äußeren dünnwandigen Rohr 19 der Temperaturabschirmung 12 erfolgt bei dem in FIG 4 dargestellten Ausführungsbeispiel durch einen elastischen Dichtring 28, der als O-Ring oder Wellendichtring ausgebildet sein kann. Ein entsprechender elastischer Dichtring 28 ist auch am in FIG 4 nicht dargestellten rechten Stirnende des Messbalkens 7 vorgesehen. Durch die elastischen Dichtringe 28 können bei dem in FIG 4 dargestellten Ausführungsbeispiel des Messbalkens 7 die elastischen Dichtmanschetten 23 des in FIG 3 dargestellten Messbalkens 7 ersetzt werden.

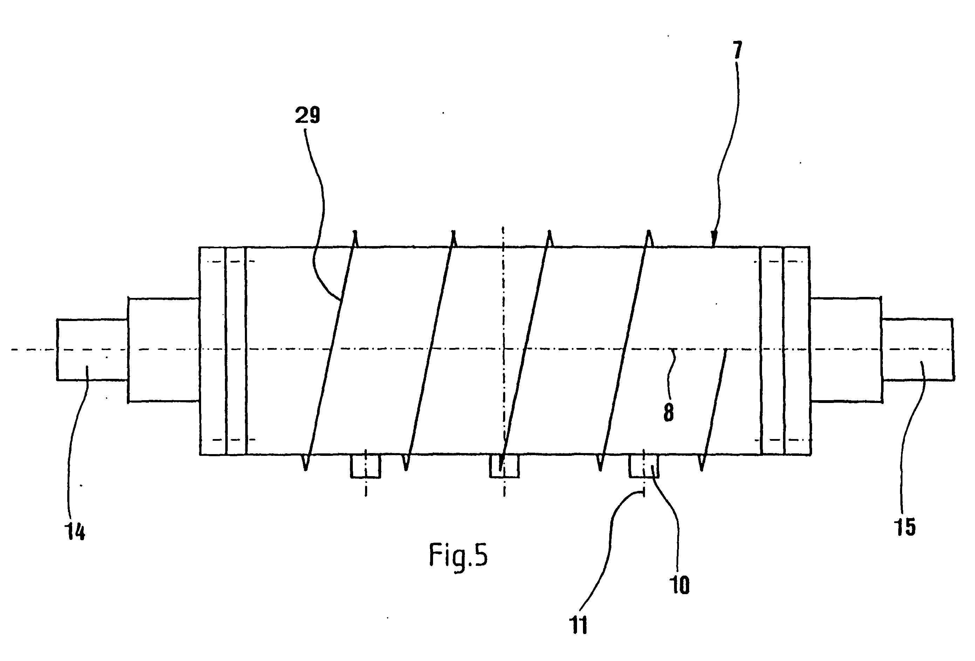

Eine Leiteinrichtung 29 zur Steuerung und Regulierung des Kühlmittelstroms zwischen dem Zulaufstutzen 24 und dem Rücklaufstutzen 25, die in FIG 5 nicht dargestellt sind, geht aus FIG 5 hervor. Diese Leiteinrichtung 29 ist im Spaltraum 20 zwischen dem in FIG 5 nicht dargestellten äußeren dünnwandigen Rohr 19 der Temperaturabschirmung 12 und dem in FIG 5 gezeigten inneren dünnwandigen Rohr 13 des Messbalkens 7 angeordnet. Mittels dieser Leiteinrichtung 29 soll eine möglichst gleichförmige Temperaturverteilung im inneren dünnwandigen Rohr 13 des Messbalkens 7 gewährleistet werden. Die in FIG 5 dargestellte Ausführungsform der Leiteinrichtung 29 ist wendelförmig ausgestaltet und auf der Außenmantelfläche des inneren dünnwandigen Rohrs 13 des Messbalkens 7 angebracht. Durch diese wendelförmige Leiteinrichtung 29 wird das Kühlmittel, das als Kühlflüssigkeit oder als Kühlgas ausgebildet sein kann, gleichmäßig längs der Außenmantelfläche des inneren dünnwandigen Rohrs 13 geführt, bevor es den Spaltraum 20 durch den Rücklaufstutzen 25 wieder verlässt. Mittels dieser wendelförmigen Leiteinrichtung 29 wird somit ein definierter Kühlmittelstrom zwischen dem Zulaufstutzen 24 und dem Rücklaufstutzen 25 gewährleistet.

Wesentlich für die Anordnung und die Befestigung der Leiteinrichtung 29 ist es, dass durch diese Leiteinrichtung 29 keine Verbindung zwischen dem inneren dünnwandigen Rohr 13 des Messbalkens 7 und dem äußeren dünnwandigen Rohr 19 der Temperaturabschirmung 12 geschaffen wird, so dass keine Verspannung des inneren dünnwandigen Rohrs 12 durch Verformung des äußeren dünnwandigen Rohrs 19 zustande kommen kann.

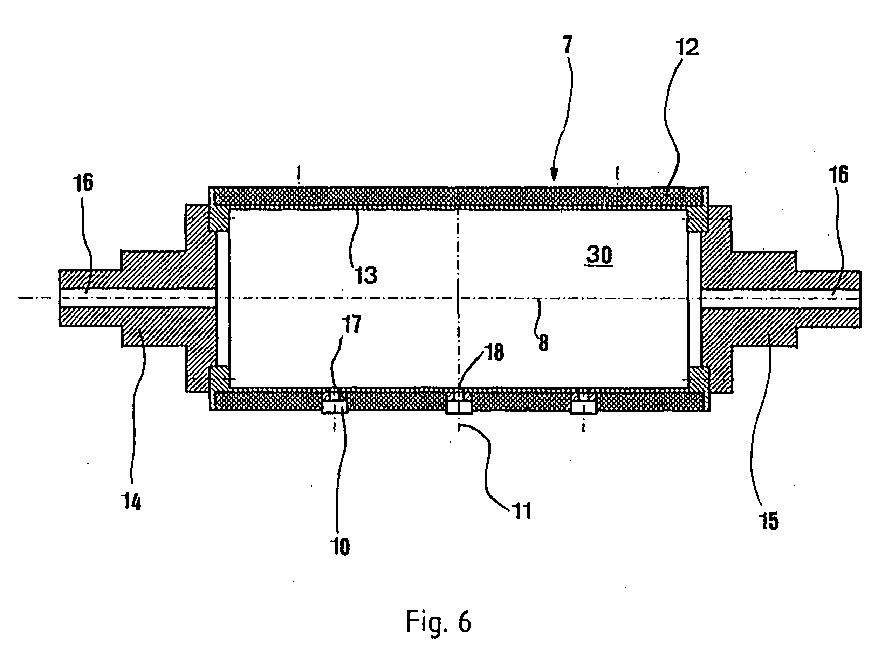

Bei der in FIG 6 dargestellten Ausführungsform des Messbalkens 7 ist dieser mit einer ihn unmittelbar spaltlos umgebenden Temperaturabschirmung 12 versehen. Die Temperaturabschirmung 12 ist als Isolierschicht aus einem wärmedämmenden Werkstoff ausgebildet, wobei dieser wärmedämmende Werkstoff elastisch oder leicht verformbar ausgebildet ist.

Die Kühlmittelbeaufschlagung des dünnwandigen Rohrs 13 des Messbalkens 7 erfolgt im inneren Hohlraum des dünnwandigen Rohrs 13, wobei in beiden Lagerzapfen 14, 15 des Messbalkens 7 Axialbohrungen 16 vorgesehen sind, durch die hindurch auch der Kühlmittelzufluss in den inneren Hohlraum 30 des dünnwandigen Rohrs 13 des Messbalkens 7 ermöglicht ist.

In weiteren Ausgestaltungen des Messbalkens 7 können dessen Rohrprofile auch in anderer Weise gestaltet sein, wobei sich die konkrete Ausgestaltung der Rohrprofile aus der konkreten Einbaulage des Messbalkens 7 ergeben; beispielsweise können derartige Profile günstigere Verformungseigenschaften infolge ihrer Eigenmasse besitzen.

## Patentansprüche

1. Vorrichtung zur Messung der Kontur, der horizontalen Krümmung und/oder der horizontalen Position einer Walze (2, 3) eines Walzgerüsts (1), mit berührungslos arbeitenden Abstandssensoren (10, mittels denen ein Abstand zur Mantelfläche der Walze (2, 3) berührungsfrei messbar ist, und mit zumindest einem Messbalken (7), der parallel zur Walze (2, 3) in einem festen Abstand zu dieser angeordnet ist und an dem mehrere Abstandssensoren (10) in seiner Axialrichtung zueinander beabstandet angeordnet sind,
**dadurch gekennzeichnet, dass** dem Messbalken (7) eine Kompensationseinrichtung zugeordnet ist, die Temperaturfühler zur Erfassung von Temperaturen am Messbalken (7) und eine Auswerteelektronik aufweist, mittels der eine auf der Grundlage der von den Temperaturfühlern erfassten Temperaturwerten ermittelte thermische Biegung des Messbalkens (7) kompensierbar ist.

2. Vorrichtung nach Anspruch 1, bei der dem Messbalken (7) eine Filtereinrichtung zugeordnet ist, mittels der mechanische Schwingungen des Messbalkens (7) in einem Messsignal unterdrückbar sind.

3. Vorrichtung nach Anspruch 1 oder 2, bei der jeder Messbalken (7) zumindest drei Abstandssensoren (10) aufweist.

4. Vorrichtung nach einem der Ansprüche 1 bis 3, die zwei oder drei Messbalken (7) aufweist, die zueinander versetzt am Umfang der Walze (2, 3) angeordnet sind.

5. Vorrichtung nach einem der Ansprüche 1 bis 4, bei der die Messbalken (7) in Laufrichtung des Walzgutbandes (6) stromauf und stromab der Arbeitswalze (2, 3) angeordnet sind.

6. Vorrichtung nach einem der Ansprüche 1 bis 5, bei der die Messbalken (7) unter unterschiedlichen Winkeln zur Walzgutebene (6) angeordnet sind.

7. Vorrichtung nach einem der Ansprüche 1 bis 6, die einer oberen Arbeitswalze (2) eines Walzgerüsts (1) zugeordnet ist.

8. Vorrichtung nach einem der Ansprüche 1 bis 6, die einer unteren Arbeitswalze (4) eines Walzgerüsts (1) zugeordnet ist.

9. Vorrichtung nach einem der Ansprüche 1 bis 8, von der eine der oberen (2) und eine zweite der unteren Arbeitswalze (4) eines Walzgerüsts (1) zugeordnet sind.

10. Vorrichtung nach einem der Ansprüche 1 bis 9, die jeweils an Arbeitswalzen (2, 3), z.B. an allen oberen und/oder allen unteren Arbeitswalzen (2, 3) unterschiedlicher Walzgerüste (1) einer Walzstraße vorgesehen ist.

11. Vorrichtung nach einem der Ansprüche 1 bis 10, bei der die an einem Messbalken (7) angeordneten Abstandssensoren (10) untereinander gleichbeabstandet sind.

12. Vorrichtung nach einem der Ansprüche 1 bis 11, bei der die an einem Messbalken (7) angeordneten Abstandssensoren (10) quer zur Laufrichtung des Walzgutbandes (6) symmetrisch zur Walzgutband- und zur Walzenmitte angeordnet sind.

13. Vorrichtung nach einem der Ansprüche 1 bis 12, bei der zumindest die beiden äußeren Abstandssensoren (10) außerhalb der Walzgutbandspur angeordnet sind.

14. Vorrichtung nach einem der Ansprüche 1 bis 13, bei der die Achse (8) jedes Messbalkens (7) und die Achsen der Abstandssensoren (10) des jeweiligen Messbalkens (7) in einer Ebene angeordnet sind.

15. Vorrichtung nach einem der Ansprüche 1 bis 14, bei der die aktiven Stirnflächen der Abstandssensoren (10) den gleichen Abstand zur Achse (8) des Messbalkens (7) aufweisen.

16. Vorrichtung nach einem der Ansprüche 1 bis 15, bei der jeder Messbalken (7) in Bezug auf die Arbeitswalze (2, 3) verschwenk- oder verfahrbar ist.

17. Vorrichtung nach einem der Ansprüche 1 bis 16, bei der jeder Messbalken (7) an seinen beiden seitlichen Stützstellen mit Positionier- und Haltevorrichtungen verbunden ist, mittels denen er verschwenk- oder verfahrbar und jeweils unter Einhaltung eines vorgegebenen Abstands zwischen seinen Abstandssensoren (10) und der Walzenoberfläche in Abhängigkeit von der Zustellung und dem aktuellen Durchmesser der Arbeitswalze (2, 3) ausrichtbar ist.

18. Vorrichtung nach einem der Ansprüche 1 bis 17, bei der jeder Messbalken (7) mit einer ihn umgebenden Temperaturabschirmung (12) versehen ist.

19. Vorrichtung nach einem der Ansprüche 1 bis 18, bei der der Messbalken (7) einen Rohrquerschnitt aufweist.

20. Vorrichtung nach Anspruch 18 oder 19, bei der die Temperaturabschirmung (12) einen Rohrquerschnitt aufweist.

21. Vorrichtung nach einem der Ansprüche 18 bis 20, bei der die. Temperaturabschirmung (12) auf der Außenfläche des Messbalkens (7) sitzt und als Isolierschicht aus einem elastischen oder leicht verformbaren und wärmedämmendem Werkstoff ausgebildet ist.

22. Vorrichtung nach einem der Ansprüche 1 bis 21, bei der im Inneren des Messbalkens (7) ein Hohlraum (30) ausgebildet ist, durch den ein Kühlmedium leitbar ist.

23. Vorrichtung nach einem der Ansprüche 18 bis 20 oder 22, bei der die Temperaturabschirmung (12) den Messbalken (7) unter Ausbildung eines Spaltraums (20) mit einem Abstand umgibt.

24. Vorrichtung nach einem der Ansprüche 1 bis 23, bei der der Messbalken (7) als dünnwandiges Rohr (13) ausgebildet ist, an dessen beiden Stirnenden jeweils ein Lagerzapfen (14, 15) angebracht ist.

25. Vorrichtung nach Anspruch 24, bei der zumindest ein Lagerzapfen (14) des Messbalkens (7) lösbar mit dem dünnwandigen Rohr (13) verbunden ist und eine durchgehende Axialbohrung (16) aufweist.

26. Vorrichtung nach einem der Ansprüche 1 bis 25, bei der auf der Außenfläche des Messbalkens (7) Augen (17) ausgebildet sind, an denen die Abstandssensoren (10) anbringbar sind.

27. Vorrichtung nach einem der Ansprüche 23 bis 26, bei der der Abstand zwischen der Außenfläche des Rohrs (13) des Messbalkens (7) und der Innenfläche eines die Temperaturabschirmung (12) bildenden äußeren Rohrs (19) konstant ist.

28. Vorrichtung nach einem der Ansprüche 18 bis 20 und 22 bis 27, bei der die Temperaturabschirmung (12) in Bezug auf den Messbalken (7) biege- und dehnkraftübertragungsfrei gelagert ist.

29. Vorrichtung nach Anspruch 28, bei er die Temperaturabschirmung (12) mittels zweier nahe ihren Stirnflächen angeordneter, radial einwärts vorstehender schmaler Lagerbunde (22) gelenkig und axialverschieblich an einer Lagervorrichtung (14, 15) des Messbalkens (7) gehaltert ist.

30. Vorrichtung nach Anspruch 28, bei der die Temperaturabschirmung (12) mittels metallischer Stütz- und Dichtmembranen am Messbalken (7) gehaltert ist.

31. Vorrichtung nach Anspruch 28, bei der die Temperaturabschirmung (12) mittels vorzugsweise nichtmetallischer Stopfbuchspackungen am Messbalken (7) gehaltert ist.

32. Vorrichtung nach einem der Ansprüche 18 bis 20 und 22 bis 31, bei der die Temperaturabschirmung (12) und die den Messbalken (7) halternde Lagervorrichtung (14, 15) mittels einer elastischen Dichteinrichtung (23; 28) verbunden sind, die den Spaltraum (20) zwischen der Innenfläche der Temperaturabschirmung (12) und der Außenfläche des Messbalkens (7) nach außen abdichtet.

33. Vorrichtung nach Anspruch 32, bei der die elastische Dichteinrichtung aus Dichtmanschetten (23) ausgebildet ist, die an ihrer einen Seite mit der Temperaturabschirmung (12) und an ihrer anderen Seite mit der den Messbalken (7) halternden Lagervorrichtung (14, 15) verbunden sind.

34. Vorrichtung nach Anspruch 32, bei der die elastische Dichteinrichtung aus Dichtringen (28) ausgebildet ist, deren Innenumfang mit der den Messbalken (7) halternden Lagervorrichtung (14, 15) und deren Außenumfang mit der Temperaturabschirmung (12) in Anlage ist.

35. Vorrichtung nach Anspruch 34, bei der die Dichtringe (28) als O-Ringe ausgebildet sind.

36. Vorrichtung nach Anspruch 34, bei der die Dichtringe (28) als Wellendichtringe ausgebildet sind.

37. Vorrichtung nach einem der Ansprüche 34 bis 36, bei der die Dichtringe (28) aus einem elastischen metallischen Werkstoff ausgebildet sind.

38. Vorrichtung nach einem der Ansprüche 34 bis 36, bei der die Dichtringe (28) aus einem elastischen nichtmetallischen Werkstoff ausgebildet sind.

39. Vorrichtung nach einem der Ansprüche 18 bis 20 und 22 bis 38, bei der zwischen der Außenfläche des Messbalkens (7) und der Innenfläche der Temperaturabschirmung (12) ein Kühlmedium angeordnet ist.

40. Vorrichtung nach Anspruch 39, bei der das Kühlmedium als Kühlgas ausgebildet ist.

41. Vorrichtung nach Anspruch 39, bei der das Kühlmedium als Kühlflüssigkeit ausgebildet ist.

42. Vorrichtung nach einem der Ansprüche 18 bis 41, bei der in der Temperaturabschirmung (12) jedes Messbalkens (7) je Abstandssensor (10) des betreffenden Messbalkens (7) ein Fenster (26) ausgebildet ist.

43. Vorrichtung nach Anspruch 42, bei der die Fenster (26) jeder Temperaturabschirmung (12) mittels einer Abdeckung (27) aus einem elektrisch nicht leitenden bzw. lichtdurchlässigen Werkstoff fluiddicht geschlossen sind.

44. Vorrichtung nach Anspruch 44, bei der die Abdeckungen der Fenster (26) als Membranen (27) ausgebildet sind.

45. Vorrichtung nach einem der Ansprüche. 39 bis 44, bei der jede Temperaturabschirmung (12) nahe ihrer einen Stirnseite einen Kühlmediumzulauf (24) und nahe ihrer anderen Stirnseite einen Kühlmediumablauf (25) aufweist.

46. Vorrichtung nach Anspruch 45, bei der zwischen dem Kühlmediumzulauf (24) und dem Kühlmediumablauf im Spaltraum (20) zwischen der Innenfläche der Temperaturabschirmung (12) und der Außenfläche des Messbalkens (7) eine Leiteinrichtung (29) zur Führung des Kühlmediums vom Kühlmediumzulauf (24) zum Kühlmediumablauf angeordnet ist.

47. Vorrichtung nach Anspruch 46, bei der die Leiteinrichtung (29) wendelförmig um den Messbalken (7) ausgebildet ist.

48. Vorrichtung nach Anspruch 46 oder 47, bei der die Leiteinrichtung (29) am Messbalken (7) befestigt und in Bezug auf die Temperaturabschirmung (12) berührungsfrei ausgebildet ist.

49. Vorrichtung nach Anspruch 46 oder 47, bei der die Leiteinrichtung an der Temperaturabschirmung befestigt und in Bezug auf den Messbalken (7) berührungsfrei ausgebildet ist.

50. Vorrichtung nach einem der Ansprüche 1 bis 49, deren Messbalken (7) aus einem üblichen Konstruktionswerkstoff ausgebildet ist bzw. sind.

51. Vorrichtung nach einem der Ansprüche 1 bis 49, deren Messbalken aus einem Werkstoff mit einem extrem niedrigen Wärmeausdehnungskoeffizienten ausgebildet ist bzw. sind.

52. Vorrichtung nach einem der Ansprüche 18 bis 51, deren Temperaturabschirmung (12) bzw. Temperaturabschirmungen (12) einwandig aus einem homogenen Werkstoff ausgebildet ist bzw. sind.

53. Vorrichtung nach einem der Ansprüche 18 bis 51, deren Temperaturabschirmung (12) bzw. Temperaturabschirmungen (12) mehrwandig aus einer Kombination von Werkstoffen, z.B. aus einem Metall und einem wärmedämmenden Material, ausgebildet ist bzw. sind.

54. Vorrichtung nach einem der Ansprüche 1 bis 53, bei der die berührungslos arbeitenden Abstandssensoren (10) als Wirbelstromsensoren ausgebildet sind.

55. Vorrichtung nach einem der Ansprüche 1 bis 53, bei der die berührungslos arbeitenden Abstandssensoren (10) als optische Sensoren ausgebildet sind.

56. Vorrichtung nach einem der Ansprüche 1 bis 55, bei der Verbindungskabel der Abstandssensoren (10) durch eine axial oder radial im Messbalken (7) ausgebildete Öffnung geführt sind.

## Claims

1. Apparatus for measuring the contour, the horizontal curvature and/or the horizontal position of a roll (2, 3) in a roll stand (1), having distance sensors (10) which operate without contact, by means of which the distance to the circumferential surface of the roll (2, 3) can be measured without contact, and having at least one measuring beam (7), which is arranged parallel to the roll (2, 3) at a fixed distance from the latter and on which a plurality of distance sensors (10) are arranged spaced apart from one another in its axial direction, **characterized in that** the measuring beam (7) is assigned a compensation device, which has temperature sensors for registering temperatures on the measuring beam (7), and evaluation electronics, by means of which it is possible to compensate for thermal bending of the measuring beam (7), determined on the basis of the temperature values registered by the temperature sensors.

2. Apparatus according to Claim 1, in which the measuring beam (7) is assigned a filter device, by means of which mechanical oscillations of the measuring beam (7) can be suppressed in a measured signal.

3. Apparatus according to Claim 1 or 2, in which each measuring beam (7) has at least three distance sensors (10).

4. Apparatus according to one of Claims 1 to 3, which has two or three measuring beams (7), which are arranged offset from one another on the circumference of the roll (2, 3).

5. Apparatus according to one of Claims 1 to 4, in which the measuring beams (7) are arranged upstream and downstream of the operating roll (2, 3) in the running direction of the strip of rolled material (6).

6. Apparatus according to one of Claims 1 to 5, in which the measuring beams (7) are arranged at different angles with respect to the plane of the rolled material (6).

7. Apparatus according to one of Claims 1 to 6, which is assigned to an upper operating roll (2) of a roll stand (1).

8. Apparatus according to one of Claims 1 to 6, which is assigned to a lower operating roll (4) of a roll stand (1).

9. Apparatus according to one of Claims 1 to 8, of which one is assigned to the upper (2) and a second is assigned to the lower operating roll (4) of a roll stand (1).

10. Apparatus according to one of Claims 1 to 9, which in each case is provided on operating rolls (2, 3), for example on all the upper and/or all the lower operating rolls (2, 3) of different roll stands (1) of a rolling mill.

11. Apparatus according to one of Claims 1 to 10, in which the distance sensors (10) arranged on a measuring beam (7) are spaced apart equally from one another.

12. Apparatus according to one of Claims 1 to 11, in which the distance sensors (10) arranged on a measuring beam (7) are arranged transversely with respect to the running direction of the strip of rolled material (6) and symmetrically with respect to the centre of the strip of rolled material and to the centre of the roll.

13. Apparatus according to one of Claims 1 to 12, in which at least the two outer distance sensors (10) are arranged outside the track of the strip of rolled material.

14. Apparatus according to one of Claims 1 to 13, in which the axis (8) of each measuring beam (7) and the axes of the distance sensors (10) of the respective measuring beam (7) are arranged in one plane.

15. Apparatus according to one of Claims 1 to 14, in which the active end faces of the distance sensors (10) are at the same distance from the axis (8) of the measuring beam (7).

16. Apparatus according to one of Claims 1 to 15, in which each measuring beam (7) can be pivoted or moved in relation to the operating roll (2, 3).

17. Apparatus according to one of Claims 1 to 16, in which each measuring beam (7) is connected at its two lateral supporting points to positioning and holding apparatuses, by means of which it can be pivoted or moved and, in each case while maintaining a predefined distance between its distance sensors (10) and the roll surface, can be aligned on the basis of the setting and the current diameter of the operating rolls (2, 3).

18. Apparatus according to one of Claims 1 to 17, in which each measuring beam (7) is provided with a temperature shield (12) surrounding it.

19. Apparatus according to one of Claims 1 to 18, in which the measuring beam (7) has a tubular cross section.

20. Apparatus according to Claim 18 or 19, in which the temperature shield (12) has a tubular cross section.

21. Apparatus according to one of Claims 18 to 20, in which the temperature shield (12) is seated on the outer surface of the measuring beam (7) and is formed as an insulating layer of a resilient or easily deformable and thermally insulating material.

22. Apparatus according to one of Claims 1 to 21, in which a hollow space (30), through which a cooling medium can be led, is formed in the interior of the measuring beam (7).

23. Apparatus according to one of Claims 18 to 20 or 22, in which the temperature shield (12) surrounds the measuring beam (7) at a distance, forming a space (20).

24. Apparatus according to one of Claims 1 to 23, in which the measuring beam (7) is constructed as a thin-walled tube (13), at the two ends of which a bearing journal (14, 15) is fitted in each case.

25. Apparatus according to Claim 24, in which at least one bearing journal (14) of the measuring beam (7) is detachably connected to the thin-walled tube (13) and has an axial bore (16) passing through it.

26. Apparatus according to one of Claims 1 to 25, in which eyes (17), to which the distance sensors (10) can be fitted, are formed on the outer surface of the measuring beam (7).

27. Apparatus according to one of Claims 23 to 26, in which the distance between the outer surface of the tube (13) of the measuring beam (7) and the inner surface of an outer tube (19) forming the temperature shield (12) is constant.

28. Apparatus according to one of Claims 18 to 20 and 22 to 27, in which the temperature shield (12) is mounted in relation to the measuring beam (7) such that it is free of the transmission of bending and expanding forces.

29. Apparatus according to Claim 28, in which the temperature shield (12) is held on a mounting apparatus (14, 15) of the measuring beam (7) in an articulated and axially displaceable manner by means of two narrow bearing collars (22) which project radially inwards and are arranged close to the end faces of the said shield.

30. Apparatus according to Claim 28, in which the temperature shield (12) is held on the measuring beam (7) by means of metallic supporting and sealing diaphragms.

31. Apparatus according to Claim 28, in which the temperature shield (12) is held on the measuring beam (7) by means of preferably non-metallic stuffing box packings.

32. Apparatus according to one of Claims 18 to 20 and 22 to 31, in which the temperature shield (12) and the mounting apparatus (14, 15) holding the measuring beam (7) are connected by means of a resilient sealing device (23; 28), which seals off the space (20) between the inner surface of the temperature shield (12) and the outer surface of the measuring beam (7) from the outside.

33. Apparatus according to Claim 32, in which the resilient sealing device is formed from sealing cuffs (23), which are connected on their one side to the temperature shield (12) and on their other side to the mounting apparatus (14, 15) holding the measuring beam (7).

34. Apparatus according to Claim 32, in which the resilient sealing device is formed from sealing rings (28), of which the inner circumference is in contact with the mounting apparatus (14, 15) holding the measuring beam (7) and of which the outer circumference is in contact with the temperature shield (12).

35. Apparatus according to Claim 34, in which the sealing rings (28) are formed as O rings.

36. Apparatus according to Claim 34, in which the sealing rings (28) are formed as shaft sealing rings.

37. Apparatus according to one of Claims 34 to 36, in which the sealing rings (28) are formed from a resilient metallic material.

38. Apparatus according to one of Claims 34 to 36, in which the sealing rings (28) are formed from a resilient non-metallic material.

39. Apparatus according to one of Claims 18 to 20 and 22 to 38, in which a cooling medium is arranged between the outer surface of the measuring beam (7) and the inner surface of the temperature shield (12).

40. Apparatus according to Claim 39, in which the cooling medium is formed as a cooling gas.

41. Apparatus according to Claim 39, in which the cooling medium is formed as a cooling liquid.

42. Apparatus according to one of Claims 18 to 41, in which a window (26) is formed in the temperature shield (12) of each measuring beam (7) of each distance sensor (10) of the relevant measuring beam (7).

43. Apparatus according to Claim 42, in which the windows (26) of each temperature shield (12) are closed in a fluid-tight manner by means of a covering (27) made of an electrically non-conductive or translucent material.

44. Apparatus according to Claim 44, in which the coverings of the windows (26) are formed as diaphragms (27).

45. Apparatus according to one of Claims 39 to 44, in which each temperature shield (12) has a cooling medium feed (24) close to its one end and a cooling medium discharge (25) close to its other end.

46. Apparatus according to Claim 45, in which a guide device (29) for guiding the cooling medium from the cooling medium feed (24) to the cooling medium discharge is arranged between the cooling medium feed (24) and the cooling medium discharge, in the space (20) between the inner surface of the temperature shield (12) and the outer surface of the measuring beam (7).

47. Apparatus according to Claim 46, in which the guide device (29) is formed spirally around the measuring beam (7).

48. Apparatus according to Claim 46 or 47, in which the guide device (29) is fixed to the measuring beam (7) and is constructed so as to be free of contact with the temperature shield (12).

49. Apparatus according to Claim 46 or 47, in which the guide device is fixed to the temperature shield and is constructed so as to be free of contact with the measuring beam (7).

50. Apparatus according to one of Claims 1 to 49, of which the measuring beam(s) (7) is/are formed from a conventional constructional material.

51. Apparatus according to one of Claims 1 to 49, of which the measuring beam(s) is/are formed from a material having an extremely low coefficient of thermal expansion.

52. Apparatus according to one of Claims 18 to 51, of which the temperature shield (12) or temperature shields (12) is or are formed with one wall from a homogeneous material.

53. Apparatus according to one of Claims 18 to 51, of which the temperature shield (12) or temperature shields (12) is or are formed with multiple walls from a combination of materials, for example from a metal and a thermally insulating material.

54. Apparatus according to one of Claims 1 to 53, in which the distance sensors (10) operating without contact are formed as eddy current sensors.

55. Apparatus according to one of Claims 1 to 53, in which the distance sensors (10) operating without contact are formed as optical sensors.

56. Apparatus according to one of Claims 1 to 55, in which connecting cables of the distance sensors (10) are led through an opening formed axially or radially in the measuring beam (7).

## Revendications

1. Dispositif de mesure du contour, de la courbure horizontale et/ou de la position horizontale d'un cylindre (2, 3) d'une cage (1) de laminage, comprenant des capteurs (10) de distance travaillant sans contact, au moyen desquels une distance vis-à-vis de la surface latérale du cylindre (2, 3) peut être mesurée sans contact, et comprenant au moins une poutre (7) de mesure, qui est disposée parallèlement au cylindre (2, 3) à distance constante de celui-ci et sur laquelle plusieurs capteurs (10) de distance sont disposés à distance les uns des autres dans sa direction axiale,
**caractérisé en ce qu'**un équipement de compensation est associé à la poutre (7) de mesure, lequel comporte des capteurs de température destinés à enregistrer des températures sur la poutre (7) de mesure, et une unité électronique d'évaluation au moyen de laquelle peut être compensée une flexion thermique de la poutre (7) de mesure qui est déterminée sur la base des valeurs de température enregistrées par les capteurs de température.

2. Dispositif suivant la revendication 1, dans lequel un équipement de filtrage, qui permet de supprimer dans le signal de mesure les oscillations mécaniques de la poutre (7) de mesure, est associé à la poutre (7) de mesure.

3. Dispositif suivant la revendication 1 ou 2, dans lequel chaque poutre (7) de mesure comporte au moins trois capteurs (10) de distance.

4. Dispositif suivant l'une des revendications 1 à 3, qui comporte deux ou trois poutres (7) de mesure qui sont disposées sur le pourtour du cylindre (2, 3) en étant mutuellement décalées.

5. Dispositif suivant l'une des revendications 1 à 4, dans lequel les poutres (7) de mesure sont disposées en amont et en aval du cylindre (2, 3) de travail dans la direction de circulation de la bande (6) de matériau à laminer.

6. Dispositif suivant l'une des revendications 1 à 5, dans lequel les poutres (7) de mesure sont disposées sous des angles différents par rapport au plan (6) du matériau à laminer.

7. Dispositif suivant l'une des revendications 1 à 6, qui est associé à un cylindre (2) de travail supérieur d'une cage (1) de laminage.

8. Dispositif suivant l'une des revendications 1 à 6, qui est associé à un cylindre (4) de travail inférieur d'une cage (1) de laminage.

9. Dispositif suivant l'une des revendications 1 à 8, un premier dispositif étant associé au cylindre (2) de travail supérieur et un deuxième dispositif au cylindre (4) de travail inférieur d'une cage (1) de laminage.

10. Dispositif suivant l'une des revendications 1 à 9, qui est respectivement prévu sur des cylindres (2, 3) de travail, par exemple sur tous les cylindres (2, 3) de travail supérieurs et/ou sur tous les cylindres (2, 3) de travail inférieurs, de différentes cages (1) de laminage d'un train de laminage.

11. Dispositif suivant l'une des revendications 1 à 10, dans lequel les capteurs (10) de distance disposés sur une poutre (7) de mesure sont équidistants.

12. Dispositif suivant l'une des revendications 1 à 11, dans lequel les capteurs (10) de distance disposés sur une poutre (7) de mesure sont disposés, transversalement à la direction de circulation de la bande (6) de matériau à laminer, symétriquement par rapport à la bande de matériau à laminer et par rapport au milieu du cylindre.

13. Dispositif suivant l'une des revendications 1 à 12, dans lequel au moins les deux capteurs (10) de distance extérieurs sont disposés en dehors de la voie de la bande de matériau à laminer.

14. Dispositif suivant l'une des revendications 1 à 13, dans lequel l'axe (8) de chaque poutre (7) de mesure et les axes des capteurs (10) de distance de la poutre (7) de mesure respective sont disposés dans un même plan.

15. Dispositif suivant l'une des revendications 1 à 14, dans lequel les faces frontales actives des capteurs (10) de distance sont à la même distance de l'axe (8) de la poutre (7) de mesure.

16. Dispositif suivant l'une des revendications 1 à 15, dans lequel chaque poutre (7) de mesure peut être pivotée ou déplacée en translation par rapport au cylindre (2, 3) de travail.

17. Dispositif suivant l'une des revendications 1 à 16, dans lequel chaque poutre (7) de mesure est reliée, en ses deux points d'appui latéraux, à des dispositifs de positionnement et de maintien au moyen desquels elle peut être pivotée ou déplacée en translation et, chaque fois en respectant une distance prescrite entre ses capteurs (10) de distance et la surface du cylindre, alignée en fonction de l'avance et du diamètre actuel du cylindre (2, 3) de travail.

18. Dispositif suivant l'une des revendications 1 à 17, dans lequel chaque poutre (7) de mesure est pourvue d'un écran (12) thermique qui l'entoure.

19. Dispositif suivant l'une des revendications 1 à 18, dans lequel la poutre (7) de mesure possède une section tubulaire.

20. Dispositif suivant la revendication 18 ou 19, dans lequel l'écran (12) thermique possède une section tubulaire.

21. Dispositif suivant l'une des revendications 18 à 20, dans lequel l'écran (12) thermique repose sur la surface extérieure de la poutre (7) de mesure et est réalisé sous la forme d'une couche isolante constituée d'un matériau élastique ou facilement déformable et calorifuge.

22. Dispositif suivant l'une des revendications 1 à 21, dans lequel une cavité (30), à travers laquelle peut être dirigé un réfrigérant, est formée à l'intérieur de la poutre (7) de mesure.

23. Dispositif suivant l'une des revendications 18 à 20 ou 22, dans lequel l'écran (12) thermique entoure à distance la poutre (7) de mesure avec formation d'un interstice (20).

24. Dispositif suivant l'une des revendications 1 à 23, dans lequel la poutre (7) de mesure est réalisée sous la forme d'un tube (13) à paroi mince, à chacune des deux extrémités frontales duquel est fixé un tourillon (14, 15) respectif.

25. Dispositif suivant la revendication 24, dans lequel au moins un tourillon (14) de la poutre (7) de mesure est assemblé de manière amovible au tube (13) à paroi mince et comporte un perçage (16) axial traversant.

26. Dispositif suivant l'une des revendications 1 à 25, dans lequel des bossages (17), sur lesquels les capteurs (10) de distance peuvent être fixés, sont formés sur la surface extérieure de la poutre (7) de mesure.

27. Dispositif suivant l'une des revendications 24 à 26, dans lequel la distance entre la surface extérieure du tube (13) de la poutre (7) de mesure et la surface intérieure d'un tube (19) extérieur constituant l'écran (12) thermique est constante.

28. Dispositif suivant l'une des revendications 18 à 20 et 22 à 27, dans lequel l'écran (12) thermique est monté par rapport à la poutre (7) de mesure sans transmission de force de flexion et d'extension.

29. Dispositif suivant la revendication 28, dans lequel l'écran (12) thermique est maintenu en articulation et en coulissement axial sur un ensemble (14, 15) de palier de la poutre (7) de mesure au moyen de deux étroits collets (22) de palier disposés à proximité de ses faces frontales et faisant saillie radialement vers l'intérieur.

30. Dispositif suivant la revendication 28, dans lequel l'écran (12) thermique est maintenu sur la poutre (7) de mesure au moyen de membranes métalliques de soutien et d'étanchéité.

31. Dispositif suivant la revendication 28, dans lequel l'écran (12) thermique est maintenu sur la poutre (7) de mesure au moyen de garnitures de presse-étoupe de préférence non métalliques.

32. Dispositif suivant l'une des revendications 18 à 20 et 22 à 31, dans lequel l'écran (12) thermique et l'ensemble (14, 15) de palier maintenant la poutre (7) de mesure sont reliés par l'intermédiaire d'un moyen (23 ; 28) d'étanchéité élastique qui assure l'étanchéité vis-à-vis de l'extérieur de l'interstice (20) entre la surface intérieure de l'écran (12) thermique et la surface extérieure de la poutre (7) de mesure.

33. Dispositif suivant la revendication 32, dans lequel le moyen d'étanchéité élastique est constitué de manchons (23) d'étanchéité, qui sont reliés sur l'un de leurs côtés à l'écran (12) thermique et sur leur autre côté à l'ensemble (14, 15) de palier maintenant la poutre (7) de mesure.

34. Dispositif suivant la revendication 32, dans lequel le moyen d'étanchéité élastique est constitué de bagues (28) d'étanchéité, dont le pourtour intérieur prend appui sur l'ensemble (14, 15) de palier maintenant la poutre (7) de mesure et dont le pourtour extérieur prend appui sur l'écran (12) thermique.

35. Dispositif suivant la revendication 34, dans lequel les bagues (28) d'étanchéité sont réalisées sous la forme de joints toriques.

36. Dispositif suivant la revendication 34, dans lequel les bagues (28) d'étanchéité sont réalisées sous la forme de bagues d'étanchéité à lèvres.

37. Dispositif suivant l'une des revendications 34 à 36, dans lequel les bagues (28) d'étanchéité sont constituées d'un matériau élastique métallique.

38. Dispositif suivant l'une des revendications 34 à 36, dans lequel les bagues (28) d'étanchéité sont constituées d'un matériau élastique non métallique.

39. Dispositif suivant l'une des revendications 18 à 20 et 22 à 38, dans lequel un réfrigérant est disposé entre la surface extérieure de la poutre (7) de mesure et la surface intérieure de l'écran (12) thermique.

40. Dispositif suivant la revendication 39, dans lequel le réfrigérant est sous la forme d'un gaz réfrigérant.

41. Dispositif suivant la revendication 39, dans lequel le réfrigérant est sous la forme d'un liquide réfrigérant.

42. Dispositif suivant l'une des revendications 18 à 41, dans lequel une fenêtre (26) est pratiquée dans l'écran (12) thermique de chaque poutre (7) de mesure pour chaque capteur (10) de distance de la poutre (7) de mesure concernée.

43. Dispositif suivant la revendication 42, dans lequel les fenêtres (26) de chaque écran (12) thermique sont fermées en étanchéité aux fluides au moyen d'un cache (27) constitué d'un matériau électriquement non conducteur ou translucide.

44. Dispositif suivant la revendication 43, dans lequel les caches des fenêtres (26) sont réalisés sous la forme de membranes (27).

45. Dispositif suivant l'une des revendications 39 à 44, dans lequel chaque écran (12) thermique comporte à proximité d'une de ses faces frontales une arrivée (24) de réfrigérant et à proximité de son autre face frontale une sortie (25) de réfrigérant.

46. Dispositif suivant la revendication 45, dans lequel un agencement (29) de conduite est disposé entre l'arrivée (24) de réfrigérant et la sortie de réfrigérant dans l'interstice (20) entre la surface intérieure de l'écran (12) thermique et la surface extérieure de la poutre (7) de mesure, afin de diriger le réfrigérant de l'arrivée (24) de réfrigérant vers la sortie de réfrigérant.

47. Dispositif suivant la revendication 46, dans lequel l'agencement (29) de conduite est réalisé en hélice autour de la poutre (7) de mesure.

48. Dispositif suivant la revendication 46 ou 47, dans lequel l'agencement (29) de conduite est fixé sur la poutre (7) de mesure et est réalisé sans contact avec l'écran (12) thermique.

49. Dispositif suivant la revendication 46 ou 47, dans lequel l'agencement de conduite est fixé sur l'écran thermique et est réalisé sans contact avec la poutre (7) de mesure.

50. Dispositif suivant l'une des revendications 1 à 49, dont la ou les poutres (7) de mesure sont constituées d'un matériau courant de construction.

51. Dispositif suivant l'une des revendications 1 à 49, dont la ou les poutres de mesure sont constituées d'un matériau dont le coefficient de dilatation thermique est extrêmement bas.

52. Dispositif suivant l'une des revendications 18 à 51, dont l'écran (12) thermique ou les écrans (12) thermiques sont réalisés à simple paroi, en un matériau homogène.

53. Dispositif suivant l'une des revendications 18 à 51, dont l'écran (12) thermique ou les écrans (12) thermiques sont réalisés à paroi multiple, en une combinaison de matériaux, par exemple un métal et un matériau calorifuge.

54. Dispositif suivant l'une des revendications 1 à 53, dans lequel les capteurs (10) de distance travaillant sans contact sont réalisés sous la forme de capteurs à courants de Foucault.

55. Dispositif suivant l'une des revendications 1 à 53, dans lequel les capteurs (10) de distance travaillant sans contact sont réalisés sous la forme de capteurs optiques.

56. Dispositif suivant l'une des revendications 1 à 55, dans lequel des câbles de connexion des capteurs (10) de distance passent par une ouverture pratiquée axialement ou radialement dans la poutre (7) de mesure.
